# EUROPÄISCHE PATENTSCHRIFT

(11) **EP 1 299 937 B1**
(45) Veröffentlichungstag und Bekanntmachung des Hinweises auf die Patenterteilung: **13.09.2006**
(21) Anmeldenummer: 01955235.5
(22) Anmeldetag: 11.07.2001
(51) Int. Cl.: H02M 1/12

(54) **NETZFILTER**
NETWORK FILTER
FILTRE DE RESEAU

(30) Priorität: 13.07.2000 DE 10034054
(43) Veröffentlichungstag der Anmeldung: 09.04.2003
(73) Patentinhaber: EPCOS AG, 81669 München (DE)
(72) Erfinder: PAULWITZ, Christian, 93186 Pettenberg (DE); KARASEK, Manfred, 89555 Steinheim (DE)
(74) Vertreter: Epping - Hermann - Fischer
(86) Internationale Anmeldenummer: PCT/DE2001/002580
(87) Internationale Veröffentlichungsnummer: WO 2002/007293

(56) Entgegenhaltungen:
- DE-A- 1 927 415
- DE-A- 2 030 360
- US-A- 2 241 832
- BEAT BROTSCHI ET AL: "STOERBEHEBUNG MIT NETZFILTERN" TECHNISCHE RUNDSCHAU, HALLWAG VERLAG. BERN, CH, Bd. 85, Nr. 10, 12. März 1993 (1993-03-12), Seiten 62-65, XP000349707 ISSN: 1023-0823
- PATENT ABSTRACTS OF JAPAN Bd. 006, Nr. 042 (E-098), 16. März 1982 (1982-03-16) & JP 56 159974 A (MITSUBISHI ELECTRIC CORP), 9. Dezember 1981 (1981-12-09)

## Beschreibung

Die Erfindung betrifft ein Netzfilter, das wenigstens eine Filterinduktivität und wenigstens eine Filterkapazität aufweist.

Es sind Netzfilter der eingangs genannten Art bekannt, die zwei bis vier Phaseneingänge und einen Schutzleiter bzw. ein Filtergehäuse aufweisen, wobei jeder Phaseneingang über eine Filterinduktivität mit dem entsprechenden Phasenausgang verbunden ist. Auf jeder Seite der Filterinduktivitäten können Kondensatoren angeschlossen sein. Diese Kondensatoren können entweder direkt oder über einen Sternpunkt, der mit einem weiteren Kondensator verbunden ist, gegen den Schutzleiter bzw. das Filtergehäuse geschaltet sein. Die bekannten Netzfilter können beispielsweise dazu verwendet werden, einen an das Netz angeschlossenen Umrichter zu entstören, d.h. die Einspeisung von hochfrequenten Störungen vom Umrichter in das Stromnetz zu verhindern. Dazu wird das Netzfilter zwischen Stromnetz und Umrichter geschaltet.

Aus der Druckschrift DE 192 74 15 ist eine Anordnung zur Hochspannungs-Gleichstromübertragung bekannt, in der ein Wechselstromnetz über einen statischen Umrichter und einen Transformator mit einem Gleichstromnetz verbunden ist. Die beschriebene Anordnung soll in ausreichender Weise verhindern, dass Oberwellen, die im Umrichter erzeugt werden, sich im Wechselspannungsnetz bemerkbar machen. Weiter soll die Anordnung Überströme, die beispielsweise durch Fehler auf der Gleichstromseite erzeugt werden, in genügendem Maße begrenzen, und darüber hinaus eine Verminderung des Gleichspannungsabfalls unter Lastbedingung gewährleisten.

Die Druckschrift JP 56159974 beschreibt ein Netzfilter gemäß dem Oberbegriff des Patentanspruchs 1.

Um im Verbund mit dem Umrichter bestimmte Normen, beispielsweise den Klasse-A-Grenzwert nach EN 55011, zu erfüllen, muß das Filter bestimmte Mindest-Dämpfeigenschaften aufweisen. Bezüglich der genannten Norm ist im Bereich zwischen 0,15 und 0,5 MHz ein Grenzwert für leitungsgebundene Störungen von 79 dB µV und zwischen 0,5 und 30 MHz ein Grenzwert von 73 dB µV (Quasispitzenwert) festgelegt. Um diese Spezifikationen zu erfüllen, ist es erforderlich, daß die in den bekannten Netzfiltern verwendeten Filterinduktivitäten eine relativ hohe Induktivität aufweisen.

Um solche Filterinduktivitäten zu realisieren, werden üblicherweise sogenannte stromkompensierte Drosseln mit Ferritkern verwendet, die so gewickelt sind, daß der durch den Hauptstrom (Gegentakt) im Ferritkern induzierte magnetische Fluß in der Summe etwa Null ergibt. Die Drosselwicklungen können aus einer oder mehreren Windungen bestehen. Um hohe Induktivitätswerte zu erzielen, müssen entsprechend viele Windungen gewickelt werden.

Dieses Herstellungsverfahren hat den Nachteil, daß es zeit- und kostenaufwendig ist und daß es insbesondere hinsichtlich der mechanischen Realisierbarkeit (Gewicht und Größe) von Netzfiltern enge Grenzen setzt.

Die Verwendung von Filterinduktivitäten, die kleinere Werte aufweisen und daher durch einfaches Aufschieben eines Ferritkerns über einen Leiter hergestellt werden könnten, ist bei den o. g. Netzfiltern nicht möglich. Mit zu kleinen Filterinduktivitäten werden die Dämpfungseigenschaften des Netzfilters schlechter, so daß das Netzfilter im Verbund mit einem beispielsweise daran angeschlossenen Umrichter die entsprechenden Normen nicht mehr erfüllt.

Ziel der vorliegenden Erfindung ist es daher, ein Netzfilter anzugeben, das mit niedrigen Filterinduktivitäten gute Filtereigenschaften aufweist.

Dieses Ziel wird erfindungsgemäß durch ein Netzfilter nach Anspruch 1 erreicht. Vorteilhafte Ausgestaltungen der Erfindung sind den weiteren Ansprüchen zu entnehmen.

Die Erfindung gibt ein Netzfilter an, das wenigstens einen Phaseneingang und einen Schutzleiter aufweist. Der Schutzleiter stellt den hochfrequenten Massebezug des Filters dar und kann beispielsweise durch ein Filtergehäuse hergestellt sein. Jeder Phaseneingang ist über eine Filterinduktivität mit einem entsprechenden Phasenausgang verbunden. Jede Filterinduktivität ist eingangsseitig über eine Filterkapazität mit dem Schutzleiter verbunden. Zusätzlich weist das Netzfilter wenigstens eine Zusatzinduktivität auf, die so angeordnet ist, daß zwischen jeder Filterkapazität und dem Schutzleiter eine Zusatzinduktivität geschaltet ist.

Das erfindungsgemäße Netzfilter hat den Vorteil, daß die asymmetrische Entstörwirkung des Filters durch die gegen den Schutzleiter geschalteten Kapazitäten im Langwellenbereich (ca. 150 kHz) erhöht wird. Zusätzlich wird durch die Zusatzinduktivität das Übergreifen höherfrequenter Erdströme (ca. 1 MHz) auf den Netzeingang wirkungsvoll abgeblockt, da die Impedanz der Zusatzinduktivität mit zunehmender Frequenz ansteigt.

In einer besonders vorteilhaften Ausführungsform der Erfindung sind die Filterkapazitäten mit einem gemeinsamen Sternpunkt verbunden, der über eine Zusatzinduktivität mit dem Schutzleiter verbunden ist. Dabei ist es möglich, den Sternpunkt über eine in Reihe dazu geschaltete Zusatzkapazität mit der Zusatzinduktivität zu verbinden, wodurch die Filtereigenschaften weiter verbessert werden.

Eine weitere vorteilhafte Ausbildung der Erfindung besteht darin, jede Filterkapazität über jeweils eine in Reihe dazu geschaltete Zusatzinduktivität mit dem Schutzleiter zu verbinden.

Durch die verbesserten Netzfiltereigenschaften können die Filterinduktivitäten reduziert werden. Daher ist ein Netzfilter besonders vorteilhaft, bei dem die Filterinduktivitäten weniger als 50µH betragen. Solche Filterinduktivitäten lassen sich mit reduziertem oder sogar ohne Aufwand für das Wickeln eines Drahtes um einen Spulenkörper herstellen.

Filterinduktivitäten < 50µH lassen sich vorteilhaft durch einen Leiter realisieren, der von einem magnetisch leitfähigen Ring umgeben ist. Solche Filterinduktivitäten sind ohne das Wickeln eines Drahtes mit geringem Aufwand einfach und billig herzustellen.

Der magnetisch leitfähige Ring, der den Leiter zur Bildung einer Filterinduktivität umgibt, kann beispielsweise ein Ferritkern sein. Solche Ferritkerne sind käuflich erhältlich, wodurch die Herstellung der Filterinduktivitäten noch einfacher und billiger wird.

Für die Zusatzinduktivität können Werte < 50µH verwendet werden. Eine solch kleine Zusatzinduktivität genügt zur Ausfilterung von hochfrequenten Störungen, da der Wechselstromwiderstand einer Induktivität proportional zur Frequenz anwächst. Zusatzinduktivitäten mit den o.g. Werten werden standardmäßig als Massenware hergestellt und sind daher sehr kostengünstig zu beziehen.

Weiterhin ist ein Netzfilter besonders vorteilhaft, bei dem die Filterkapazitäten und die Zusatzkapazität zwischen 1 nF und 10 µF betragen. Diese typischen Werte lassen sich leicht durch käufliche Kondensatoren realisieren und sind zur Erfüllung des Klasse-A-Grenzwerts nach EN 55011 bestens geeignet.

Das erfindungsgemäße Netzfilter kann auch besonders vorteilhaft als zwei- oder mehrstufiges Filter ausgestaltet sein. Dazu wird zu jeder Filterinduktivität eine oder mehrere weitere Filterinduktivitäten in Reihe geschaltet. Ein solches zwei- oder mehrstufiges Netzfilter weist gegenüber einem einstufigen Filter noch bessere Filtereigenschaften auf.

Im folgenden wird die Erfindung anhand von Ausführungsbeispielen und den dazugehörigen Figuren näher erläutert.

Figur 1 zeigt beispielhaft die schematische Darstellung eines erfindungsgemäßen einphasigen Netzfilters.

Figur 2 zeigt beispielhaft die schematische Darstellung eines erfindungsgemäßen dreiphasigen Netzfilters ohne Nulleiter.

Figur 3 zeigt beispielhaft die schematische Darstellung eines weiteren erfindungsgemäßen dreiphasigen Netzfilters ohne Nulleiter.

Figur 4 zeigt beispielhaft die schematische Darstellung eines dreiphasigen Netzfilters mit Nulleiter.

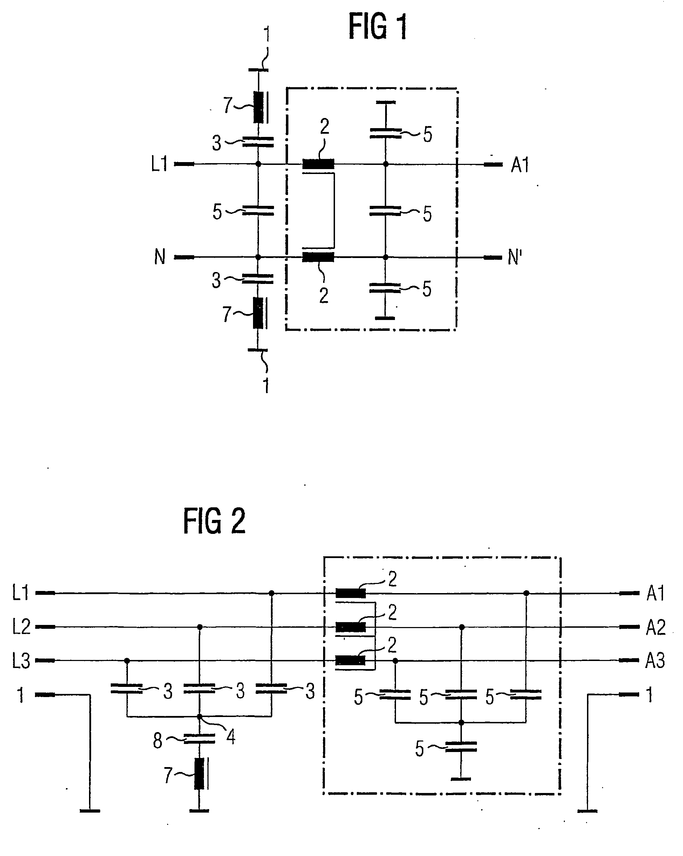

Figur 1 zeigt ein erfindungsgemäßes Netzfilter mit einem Phaseneingang L1, einem Phasenausgang A1, einem Nulleitereingang N und einem Nulleiterausgang N'. Ein- und Ausgänge sind jeweils durch eine Filterinduktivität 2 miteinander verbunden. Die Eingänge L1, N sind an ein Stromnetz anschließbar, während die Ausgänge A1, N' beispielsweise an einen Umrichter angeschlossen werden können. Ferner weist das Netzfilter einen Schutzleiter 1 auf.

Auf der Eingangsseite der Filterinduktivitäten 2 sind Filterkapazitäten 3 angeordnet, die die Filterinduktivitäten 2 mit dem Schutzleiter 1 verbinden. Zwischen dem Schutzleiter 1 und den Filterkapazitäten 3 ist jeweils noch eine Zusatzinduktivität 7 in Reihe geschaltet. Auf der Ein- und Ausgangsseite der Filterinduktivitäten 2 sind weitere Kapazitäten 5 verschaltet. Durch die Zusatzinduktivität 7 wird verhindert, daß auf der Ausgangsseite des Netzfilters im Schutzleiter 1 auftretende hochfrequente Störungen in den Phaseneingang L1 oder den Nulleitereingang N und damit in das Stromnetz eingespeist werden.

Figur 2 zeigt ein erfindungsgemäßes Netzfilter mit drei Phaseneingängen L1, L2, L3 sowie drei Phasenausgängen A1, A2, A3. Ferner weist das Filter einen Schutzleiter 1 auf. Die auf der Eingangsseite der Filterinduktivität 2 angeordneten Filterkapazitäten 3 sind zu einem gemeinsamen eingangsseitigen Sternpunkt 4 geführt. Von dort werden sie über eine Zusatzkapazität 8 und eine in Reihe dazu geschaltete Zusatzinduktivität 7 mit dem Schutzleiter 1 verbunden. Durch die Zusatzinduktivität 7 wird verhindert, daß auf der Ausgangsseite des Netzfilters im Schutzleiter 1 auftretende hochfrequente Störungen in das Stromnetz eingespeist werden. Durch die Zusatzkapazität 8 wird die Qualität des Netzfilters verbessert, so daß es mit geringeren Filterinduktivitäten 2 bei gleichbleibenden Dämpfungseigenschaften auskommt.

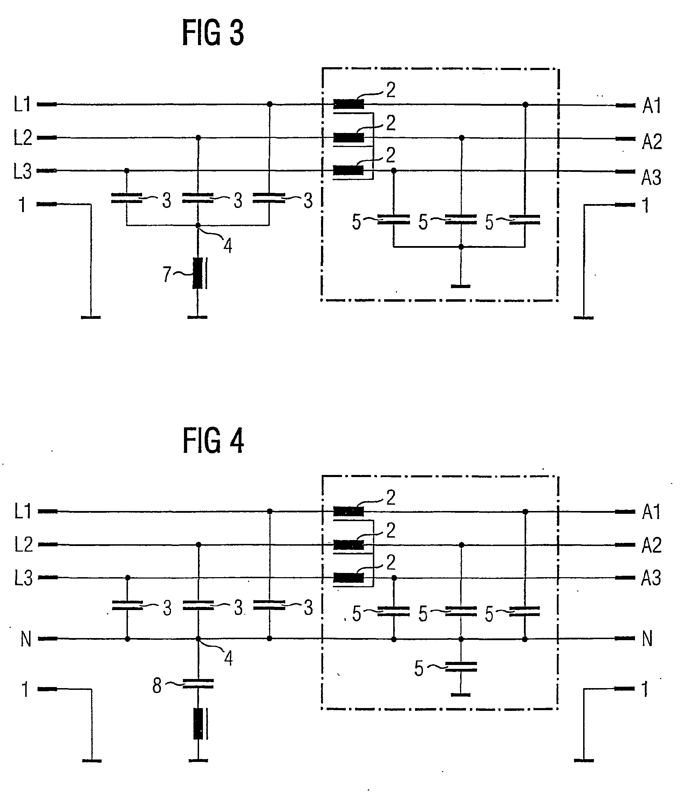

Figur 3 zeigt ein dreiphasiges Filter, bei dem die Filterkapazitäten 3 ohne eine weitere Zusatzkapazität direkt mit der Zusatzinduktivität 7 beziehungsweise dem Schutzleiter 1 verbunden sind. Durch die Zusatzinduktivität 7 wird verhindert, daß auf der Ausgangsseite des Netzfilters im Schutzleiter 1 auftretende hochfrequente Störungen in das Stromnetz eingespeist werden.

Figur 4 zeigt ein dreiphasiges Netzfilter, bei dem die auf der Eingangsseite der Filterinduktivitäten 2 angeordneten Filterkapazitäten 3 mit einem gemeinsamen eingangsseitigen Sternpunkt 4 verschaltet sind, der mit dem Nulleitereingang N verbunden ist. Der eingangsseitige Sternpunkt 4 ist über eine Zusatzkapazität 8 und eine in Reihe dazu geschaltete Zusatzinduktivität 7 mit dem Schutzleiter 1 verbunden.

Die in den Figuren dargestellten Filter sind einstufige Filter, die durch mehrmaliges Hintereinanderschalten des durch die gestrichelte Markierung gekennzeichneten Schaltungsteiles leicht zu mehrstufigen Filtern mit verbesserten Filtereigenschaften erweitert werden können.

## Patentansprüche

1. Netzfilter, das wenigstens zwei Phaseneingänge (L1, L2, L3) und einen Schutzleiter (1) aufweist, bei dem jeder Phaseneingang (L1, L2, L3) über eine Filterinduktivität (2) mit einem entsprechenden Phasenausgang (A1, A2, A3) verbunden ist, bei dem jede Filterinduktivität (2) über eine Filterkapazität (3) mit dem Schutzleiter (1) verbunden ist und die Filterkapazitäten (3) mit einem gemeinsamen Sternpunkt (4) verbunden sind, der über eine Zusatzinduktivität (7) mit dem Schutzleiter (1) verbunden ist,
**dadurch gekennzeichnet, dass**
die Filterinduktivitäten eingangsseitig mit dem Schutzleiter (1) verbunden sind, und
der Schutzleiter (1) einen hochfrequenten Massebezug des Netzfilters darstellt.

2. Netzfilter nach Anspruch 1,
bei dem der Sternpunkt (4) über eine in Reihe dazu geschaltete Zusatzkapazität (8) mit der Zusatzinduktivität (7) verbunden ist.

3. Netzfilter nach Anspruch 1 oder 2,
bei dem die Filterinduktivitäten (2) weniger als 50 µH betragen.

4. Netzfilter nach Anspruch 1 bis 3,
bei dem die Filterinduktivitäten (2) durch einen von einem magnetisch leitfähigen Ring umgebenen Leiter gebildet sind.

5. Netzfilter nach Anspruch 1 bis 4,
bei dem die Filterinduktivitäten (2) durch einen von einem Ferritkern umgebenen Leiter gebildet sind.

6. Netzfilter nach Anspruch 1 bis 5,
bei dem die Zusatzinduktivität (7) weniger als 50 µH beträgt.

7. Netzfilter nach Anspruch 1 bis 6,
bei dem zu jeder Filterinduktivität (2) eine oder mehrere weitere Filterinduktivitäten in Reihe geschaltet sind.

## Claims

1. Line filter having at least two phase inputs (L1, L2, L3) and one protective earth conductor (1), in which each phase input (L1, L2, L3) is connected to a corresponding phase output (A1, A2, A3) via a filter inductance (2), in which each filter inductance (2) is connected to the protective earth conductor (1) via a filter capacitance (3), and the filter capacitances (3) are connected to a common star point (4), which is connected to the protective earth conductor (1) via an additional inductance (7), **characterized in that**
the filter inductances are connected on the input side to the protective earth conductor (1), and
the protective earth conductor (1) constitutes a high-frequency ground reference of the line filter.

2. Line filter according to Claim 1,
in which the star point (4) is connected to the additional inductance (7) via an additional capacitance (8) connected in series with it.

3. Line filter according to Claim 1 or 2,
in which the filter inductances (2) are less than 50 µH.

4. Line filter according to Claim 1 to 3,
in which the filter inductances (2) are formed by a conductor encircled by a magnetically conducting ring.

5. Line filter according to Claim 1 to 4,
in which the filter inductances (2) are formed by a conductor encircled by a ferrite core.

6. Line filter according to Claim 1 to 5,
in which the additional inductance (7) is less than 50 µH.

7. Line filter according to Claim 1 to 6,
in which one or more extra filter inductances are connected in series with each filter inductance (2).

## Revendications

1. Filtre de réseau, qui comporte au moins deux entrées de phase (L1, L2, L3) et un conducteur de protection (1), dans lequel chaque entrée de phase (L1, L2, L3) est reliée à une sortie de phase correspondante (A1, A2, A3) par une inductance de filtre (2), dans lequel chaque inductance de filtre (2) est reliée par une capacité de filtre (3) au conducteur de protection (1) et dans lequel les capacités de filtre (3) sont reliées à un point d'étoile commun (4) qui est relié par une inductance supplémentaire (7) au conducteur de protection (1),
**caractérisé par le fait que**
les inductances de filtre sont reliées du côté de l'entrée au conducteur de protection (1), et
le conducteur de protection (1) représente une liaison à la masse, à haute fréquence, du filtre de réseau.

2. Filtre de réseau selon la revendication 1,
dans lequel le point d'étoile (4) est relié à l'inductance supplémentaire (7) par une capacité supplémentaire (8) branchée en série.

3. Filtre de réseau selon la revendication 1 ou 2,
dans lequel les inductances de filtre (2) valent moins de 50 µH.

4. Filtre de réseau selon l'une des revendications 1 à 3,
dans lequel les inductances de filtre (2) sont formées par un conducteur entouré par un anneau magnétiquement conducteur.

5. Filtre de réseau selon l'une des revendications 1 à 4,
dans lequel les inductances de filtre (2) sont formées par un conducteur entouré par un noyau de ferrite.

6. Filtre de réseau selon l'une des revendications 1 à 5,
dans lequel l'inductance supplémentaire (7) vaut moins de 50 µH.

7. Filtre de réseau selon l'une des revendications 1 à 6,
dans lequel une ou plusieurs autres inductances de filtre sont branchées en série avec chaque inductance de filtre (2).
